# EUROPEAN PATENT SPECIFICATION

(11) **EP 0 688 838 B1**
(45) Date of publication and mention of the grant of the patent: **08.12.1999**
(21) Application number: 95810296.4
(22) Date of filing: 04.05.1995
(51) Int. Cl.: C09D 11/02, A63F 3/06

(54) **Composition for forming abrasion-removable coatings**
Zusammensetzung für abreibbare Beschichtungen
Composition pour revêtements grattables

(30) Priority: 10.05.1994 CH 145594
(43) Date of publication of application: 27.12.1995
(73) Proprietor: SICPA HOLDING S.A., 1008 Prilly (CH)
(72) Inventor: Amon, Maurice A., CH-1231 Conches-Genève (CH); Bleikolm, Anton, CH-1024 Ecublens (CH); Bethenod, Dominique, CH-1073 Savigny (CH); Rozumek, Olivier, CH-1609 St. Martin (CH)
(74) Representative: Hepp, Dieter

(56) References cited:
- EP-A- 0 233 007
- DE-A- 3 614 653
- US-A- 3 823 110
- US-A- 5 215 576

## Description

This invention is related to the use of a composition comprising 5 to 40 % binder, 10 to 60 % filler, 1 to 30 % pigments, 0 to 10 % additives as abrasion-removable coatings on security documents.

In the present document, the term "ink" is to design any composition which is capable of forming a coating on a solid substrate and which can be applied by a printing method.

Since a long time, abrasion removable coatings are known which are applied by printing to various substrates in order to temporarily mask certain alphanumerical and/or graphic information or indicia such as numbers, drawings, labels and logos, which are present on the particular substrate. Examples are lottery tickets, promotional games and advertisement documents where certain areas are hidden from view. For example, the number of a lottery ticket is masked by an opaque coating, and the buyer of the ticket will be aware immediately after the purchase if the ticket will win, without waiting for the draw, by removal of the temporary coating in scratching with a fingernail or any other suitable instrument.

In general, the "abrasion-removable" inks (i.e. inks capable of producing an abrasion-removable coating) are inks for screen printing, flexographic printing or heliogravure. However, other printing methods such as typography or offset can in principle also be used. Most of the abrasion-removable inks presently used are formulated on the base of volatile organic solvents and therefore own severe shortcomings which are proper to the use of this type of substances, namely the toxicity for the manufacturer and the printer, the inflammability, the environmental pollution, etc.

U.S.patent specification No. US-A-5,215,576 discloses abrasion-removable aqueous inks which should overcome these disadvantages. However, these inks contain, besides water, very large amounts of volatile components; these are the following:
- the neutralizing agent used for the stabilization of the aqueous acrylic dispersions which are used as the sole binder mentioned in the patent. The neutralizing agent may be ammonia, triethyl amine, triethanol amine or any other volatile organic base. The acrylic dispersions mentioned in the Examples of the patent specification are stabilized with ammonia;
- aqueous solutions of ammonia used for adjusting the pH of the ink;
- isopropyl alcohol which is used, according to the Examples, in amounts of from 6.5 to more than 9 % as antifoaming agent and also for raising the drying rate of the freshly printed ink film.

It should be added that the ink described in this document does apparently not remain stable for long periods of time after the addition of the aluminum which is used as a pigment and which ascertains the coverage. The inventors, in fact, indicate that the pigment is mixed into the acrylic base only at the moment of printing. This will say that the ink is in fact a two-component one which represents a disadvantage with respect to the compositions comprising organic solvents which are supplied ready for use.

According to the document EP-A2-0,233,007, a coating which is opaque and which can be removed by scratching contains a pigment and a heat-gelled plastisol composition. This composition comprises a polymer and large amounts of plasticizer which acts effectively as a solvent and/or diluent too. Comparative tests have shown that the hardening of the composition applied to a substrate is firstly too slow and not compatible with the running speed of modern printing presses, and that the scratchability of the layer is bad since it has a gum-like consistence. It is to be feared that the properties of the layer will change with time since plasticizers are known to migrate.

Finally the composition described in Example 1 is much too viscous for being printed. It is necessary to add large quantities of auxiliary plasticizer inducing the inconveniences set forth above, or to further add white spirit as suggested in another example.

The document DE-A1-3,614,653 discloses a continuous printing method of opaque and abrasion-removable areas having a silvery appearance; the inks are based on a dispersion of natural latex and contain ammonia.

The first and major object of this invention is to provide an abrasion-removable composition, in particular a printing ink, which does not show the aforementioned shortcomings.

In particular the printing ink has to be storage stable, provide a good scratchability and also safeguard a proper adherence to the underlying substrate which satisfies all security aspects of the document. Another object of this invention is to provide such a composition in the form of a printing ink which can be applied by the methods of flexographic printing, heliogravure, or screen printing, in printing lottery tickets, promotional games and similar products

Still another object of the present invention is to provide a document or any other substrate having thereon on certain areas at least one opaque and abrasion-removable printing temporarily disguising alphanumeric or/and graphical information, obtained by the use of the compositions according to the present invention and optionally carrying at least one decorative layer.

These objects are met by the use of a composition comprising 5 to 40 % binder, 10 to 60 % filler, 1 to 30 % pigments, 0 to 10 % additives. Said composition is free from any volatile organic compound and from ammonia, the binder being an aqueous dispersion of a styrene-butadien copolymer selected from the group of such copolymers which do not contain coalescence agents or volatile organic neutralizing agents and excluding acrylic dispersions and solutions and water being the only solvent or diluent of the composition as printing ink for the production of an abrasion-removable coating on security documents.

The composition to be used according to this invention may be prepared by a method comprising the steps of mixing a pigment which has optionally been pre-dispersed, with water; the preparation of a paste from the other, powdery components of any kind, especially the fillers, and an aqueous additive composition or water, respectively; and the combination under stirring until homogeneity of the two pastes obtained above with the aqueous binder.

A security document obtained in accordance with the invention comprises at least one predetermined area region where alphanumeric and/or graphical information situated below said area portion are masked, said masked area regions being abrasion-removable, wherein said masked areas have been obtained by the application of at least one composition as defined above.

The composition to be used according to this invention contains an aqueous solution or dispersion of a styrene-butadien copolymer. This definition includes emulsions, micro-emulsions, suspensions and dispersions including colloidal ones.

The basic steps of printing a document that is to show temporarily disguised information, called "security document" in this specification, are as follows:
1. base printing
2. valorization printing
3. application of a separation (release) varnish
4. application of one or more abrasion-removable layers
5. application of decorative inks.

The printing inks described herein not only allow to realize step 4 above but also step 5.

Step 1 of the overall printing process comprises the base printing that will determine the general aspect of the security document. This printing can be made by offset, heliogravure, flexographic, typographic printing or any other desired printing method. Sometimes, an opacifying printing is also applied to the regions that are foreseen for receiving the valorization printing.

In step 2, the information that will temporarily be masked is printed on the locations selected for the valorization, such as a number or a logo.

Step 3 comprises the application of a separation or release varnish on at least those regions which will receive the abrasion-removable opaque layer. These varnishes are well known to the one skilled in the art, and the application may be effected by offset printing or by any other known method. The release layer thus obtained serves to make the scratching easier, and it protects and fixes the valorization (see step 2).

During step 4, the abrasion-removable layer is applied. It has two basic functions:
- disguising the information printed on the support during valorization in step 2. To achieve this aim, it should firstly constitute a barrier to the human eye's view and make a reading by transparency impossible, being well opaque, and it should further sufficiently attenuate, under glancing illumination, the relief produced during valorization.
   The layer should also make impossible the access to the valorization in protecting the latter against attempts to read the valorization in using various techniques, treatments or substances such as optical fibers, X-rays, magnetic devices, corona discharges, chemical reagents etc. This security function is ascertained by the abrasion-removable layer alone or by a combined effect of the abrasion-removable layer and the decorative layers (see step 5). Institutes such as the Institute of Scientific Police and Criminology in Lausanne, Switzerland, have developed a series of tests allowing to evaluate the level of protection on lottery tickets.
- bringing about the abrasion-removable qualities ("scratchability"). To comply with this, the layer produced in one or more passages should be able of being removed from the security document surface under the effect of a mechanical action, for example scratching with a fingernail or by means of a coin.
   The abrasion-removable layer should preferably be applied by the screen printing, flexographic printing or heliogravure printing techniques; it is needless to say that the rheological properties of the ink should be adapted to the selected printing method.

Step 5 has the role of decorating the scratchable region since the latter has in most cases an unpleasant gray color. But the decoration layer may also contribute to the security of the document.

When using styrene-butadiene copolymers as binder for abrasion-removable coatings all the above listed functions with respect to steps 4 and 5 are fulfilled, and it is offered the great advantage compared with known inks that it is free from any volatile component, water excepted, i.e. that it does in particular not contain any one of the following product classes:
- solvents,
- volatile coalescence agents such as glycols or glycol ethers,
- organic neutralization agents,
- volatile anti-foaming, agents, for example isopropyl alcohol,
- ammonia.

The composition to be used according to this invention contains three classes of products, namely binder, pigment and fillers. Additives, present if necessary or desired, are a fourth class of products. If necessary, water will be added to the composition.

The essential components of the compositions will now be further described in the following.

### The binders

The binders selected for the inks are aqueous dispersions of synthetic resins which do contain neither coalescence agents nor volatile neutralizing agents. This definition excludes all acrylic dispersions and solutions since the stabilization of these products is accomplished by a neutralisation with volatile organic bases such as triethyl amine or triethanol amine, or with ammonia. These facts are also true for polyurethane dispersions since these products contain organic bases stemming from the neutralization of the polymer as such or from surfactive agents used for the stabilization of the polymer in water. These dispersions often contain also coalescence agents such as N-methyl-pyrrolidone for lowering the film-forming temperature.

Consequently, in accordance with the present invention the printing inks are prepared using aqueous dispersions of styrene-butadiene copolymers. A great number of such dispersions contain neither volatile organic compounds nor ammonia.

### The Pigments

The pigments are selected dependent on their opacifying properties. Their principal function in the abrasion-removable layer or layers is to ascertain the opacity of the dry film. An aluminum pigment is very often used to this end. This pigment is supplied in the grade "leafing" or "non-leafing", i.e. whether the particles have been treated with stearic or oleic acid, respectively. Since the film-forming compositions used for the preparation of the inks to be used according to this invention are aqueous ones, pigments which are stable with respect to water should be used, namely those which are passivated for avoiding any release of hydrogen.

It will also be possible to use color pigments in the compositions, alone or mixed with the aluminum pigment. Some of these pigments are able to ascertain the opacity of the abrasion-removable layer alone, but others should be mixed with aluminum pigment in order to give a sufficient opacity. The use of a colored abrasion-removable layer allows to save a decorative ink.

Special pigments may be introduced into the compositions in order to improve the security properties of the document for hindering a fraudulent reading of the valorization: an electrically conducting pigment such as carbon black will prevent a reading by electrifying the surface of the document; a magnetic pigment such as certain iron oxides will disturb the signal emitted by a magnetic valorization; etc. In these cases too, these special pigments can be used alone if they already ascertain a sufficient opacity, or they will be mixed with the other pigments already mentioned above.

Further to the pigments, coloring agents may also be added. If a solvent is used to which they are sensible to remove the abrasion-removable layer and to read the valorization, these coloring agents will leave behind a trace which can easily be detected with the naked eye.

### The fillers

The compositions to be used according to the present invention contain fillers for modifying the rheology and, before all, for adjusting the scratchability of the printed document. Examples of inorganic fillers which can be used are calcium carbonate and barium sulfate. It should be noted that certain inorganic pigments which are added in large amounts can also fulfill the function of a filler such as titanium dioxide and will be considered as such in the following working examples. Organic fillers such as Ropaque OP 62LO (Rohm and Haas), constituted by polymer microspheres, can also be used. The listing given above is not exhaustive.

### The additives

The compositions contain, if necessary, the additives normally used in printing inks such as antifoaming agents, surfactive agents and thickeners, biocidal agents, spreading agents and rheology regulators, under the condition that they do not contain any volatile organic compound or ammonia.

In the compositions to be used according to this invention, the different classes of products are present in the following percentages which refer to the weight of the total composition ready for use:
- binders: 5 to 40 %,
- pigments: 1 to 30 %,
- fillers: 10 to 60 %,
- additives: 0 to 10 %,
the remainder of the composition being made up by water, preferably demineralized water.

The manufacturing of the compositions is normally performed in three steps. First, the pigment or pigments are mixed with water. Subsequently, dispersions of all other powders of all kinds are prepared, primarily of the fillers, by mixing them with an aqueous preparation of the additives or with pure water. Finally, the two pastes obtained in the two proceeding steps are united with the film-forming composition, i. e. the binder. The whole is mixed until homogeneity is attained.

The invention will now be explained in more detail by means of some working Examples. Of course, the invention will by no means be limited to these Examples. All percentages are given by weight and refer to the weight of the completed composition.

### Example 1: Abrasion-removable screen printing ink

The ink is prepared according to the method described below. It is composed of the following constituents:

| | |
|---|---|
| Aquavex 5000-207 S (Silberline) | 6 % |
| demineralized water | 6 % |
| Ti02 AT-1 (Bayer) | 45 % |
| Rhéolate 208 (Rheox) | 0.3 % |
| Tego Foamex N (Tego) | 2 % |
| demineralized water | 26.7 % |
| Intex 131 (Enichem) | 14 % |

Aquavex 5000-207 S is a "non-leafing" passivated aluminum pigment. The filler is titanium dioxide AT-1. Rhéolate 208 is a thickening agent based on polyurethane without solvent. Tego Foamex N is a silicone based antifoaming agent without solvent. Intex 131 is an emulsion of a styrene-butadien copolymer; its pH is about 10.5. The solids content is 65 %, and the styrene-butadien copolymer contains 30 % of styrene.

The ink finally obtained is of gray color, has an excellent opacity when printed through a screen of 77T mesh, and the printings have an excellent scratchability. In an oven held at 60°C, the ink is stable during at least 14 days in a closed receptacle. The viscosity of this ink is 2.1 Pa·s (Brookfield RDVD I+, S05, 100 rpm, 25°C).

### Example 2: Blue screen printing ink for decoration

The ink which is now to be described is a decorative ink to be overprinted on an abrasion-removable silvery opaque ink layer such as mentioned in Example 1. It contains the following components:

| | |
|---|---|
| Titanium dioxide AT-1 | 42.5 % |
| water | 29.3 % |
| Tego Foamex N | 2 % |
| Rhéolate 208 | 0.2 % |
| Blue Unisperse G-PI, (Ciba-Geigy) | 12.0 % |
| Intex 131 | 14.0 % |

The Blue Unisperse G-PI is a pigment dispersion (phthalocyanine pigments) in water and a mixture of anionic and nonionic surfactive agents and does not contain any volatile compound (water excepted). If desired, other color shades or other pigment bases can be used.

### Example 3: Abrasion-removable heliogravure ink

| | |
|---|---|
| Titanium dioxide AT-1 | 29 % |
| Demineralized water | 29 % |
| Ropaque OP-62 LO | 7.5 % |
| Tego Foamex 1435 | 2 % |
| Tego Wet KL 245 | 1 % |
| Aquavex 5000-207 S | 10 % |
| Demineralized water | 10 % |
| Intex 131 | 11.5 % |

## Claims

1. Use of a composition comprising 5 to 40 % binder, 10 to 60 % filler, 1 to 30 % pigments, 0 to 10 % additives, said composition being free from any volatile organic compound and from ammonia, said binder being an aqueous dispersion of a styrene-butadien copolymer selected from the group of such copolymers which do not contain coalescence agents or volatile organic neutralizing agents and excluding acrylic dispersions and solutions and water being the only solvent or diluent of the composition,as printing ink for the production of an abrasion-removable coating on security documents.

2. Use of a composition according to claim 1, wherein said pigment comprises an opacifying pigment capable of disguising images of the underlying substrate when applied thereto and dried.

3. Use of a composition according to claim 2, wherein said opacifying pigment is a metal pigment which is passivated against the reaction with water.

4. Use of a composition according to claim 3, wherein said opacifying metal pigment is aluminium.

5. Use of a composition according to claim 1 to 4, additionally comprising at least one organic or inorganic colouring agent.

6. Use of a composition according to claim 1 to 5, wherein said additives are selected from the group consisting of antifoaming agents, surfactive agents, thickening agents, spreading agents, rheology regulators and biocidal agents.

7. Use of a composition according to claim 1 to 6 wherein said composition further comprises an electrically conducting and/or magnetic pigment.

8. Use of a composition according to anyone of the preceding claims wherein said filler is at least one finely divided preparation of particles selected from the group consisting of calcium carbonat, barium sulfate and titanium dioxide.

9. Use of a composition as defined in anyone of the preceding claims for flexographic printing, heliogravure printing, and screen printing.

## Patentansprüche

1. Verwendung einer Zusammensetzung, umfassend 5 bis 40 % Binder, 10 bis 60 % Füllstoff, 1 bis 30 % Pigmente, 0 bis 10 % Additive, wobei die Zusammensetzung frei von jeder flüchtigen organischen Verbindung und Ammoniak ist, wobei der Binder eine wäßrige Dispersion eines Styrol-Butadien-Copolymerisats ist, ausgewählt aus der Gruppe solcher Copolymerisate, die keine Koaleszenzmittel oder flüchtige organische Neutralisierungsmittel enthalten und ausgenommen Acryl-Dispersionen und -Lösungen, und wobei Wasser das einzige Lösungsmittel oder Verdünnungsmittel der Zusammensetzung ist, als Drucktinte zur Herstellung einer durch Abrieb entfernbaren Beschichtung auf Sicherheitsdokumenten.

2. Verwendung einer Zusammensetzung nach Anspruch 1, wobei das Pigment ein deckfähiges Pigment umfaßt, welches Bilder des darunterliegenden Substrats abdecken kann, wenn es darauf aufgetragen und getrocknet ist.

3. Verwendung einer Zusammensetzung nach Anspruch 2, wobei das Pigment mit Deckvermögen ein Metall-Pigment ist, welches gegen die Reaktion mit Wasser passiviert ist.

4. Verwendung einer Zusammensetzung nach Anspruch 3, wobei das deckfähige Metall-Pigment Aluminium ist.

5. Verwendung einer Zusammensetzung nach einem der Ansprüche 1 bis 4, zusätzlich umfassend mindestens ein organisches oder anorganisches Färbemittel.

6. Verwendung einer Zusammensetzung nach einem der Ansprüche 1 bis 5, wobei die Additive ausgewählt sind aus der Gruppe, bestehend aus Antischaummitteln, oberflächenaktiven Mitteln, Verdickungsmitteln, Streichmitteln, Fließregulatoren und bioziden Mitteln.

7. Verwendung einer Zusammensetzung nach einem der Ansprüche 1 bis 6, wobei die Zusammensetzung weiterhin ein elektrisch leitfähiges und/oder magnetisches Pigment umfaßt.

8. Verwendung einer Zusammensetzung nach einem der vorhergehenden Ansprüche, wobei der Füllstoff mindestens eine fein verteilte Zubereitung von Teilchen ist, ausgewählt aus der Gruppe, bestehend aus Calciumcarbonat, Bariumsulfat und Titandioxid.

9. Verwendung einer in einem der vorhergehenden Ansprüche definierten Zusammensetzung für Flexodruck, Heliogravüre-Druck und Siebdruck.

## Revendications

1. Utilisation d'une composition contenant 5 à 40 % de liant, 10 à 60 % de matière de charge, 1 à 30 % de pigments, 0 à 10 % d'additifs, ladite composition étant dépourvue de tout composé organique volatil et dépourvue d'ammoniaque, ledit liant étant une dispersion aqueuse d'un copolymère de butadiène et de styrène choisi dans le groupe de tels copolymères qui ne contiennent pas d'agents de coalescence ou d'agents de neutralisation organiques volatils, les dispersions et solutions acryliques étant exclues, et l'eau étant le seul solvant ou diluant de la composition, sous forme d'encre d'impression pour la production d'un revêtement pouvant être enlevé par abrasion sur des documents de sécurité.

2. Utilisation d'une composition selon la revendication 1, dans laquelle ledit pigment comprend un pigment opacifiant capable de masquer des images du substrat sous-jacent lorsqu'il est appliqué sur ce dernier et séché.

3. Utilisation d'une composition selon la revendication 2, dans laquelle ledit pigment opacifiant est un pigment métallique qui est passivé contre la réaction avec l'eau.

4. Utilisation d'une composition selon la revendication 3, dans laquelle ledit pigment métallique opacifiant est l'aluminium.

5. Utilisation d'une composition selon les revendications 1 à 4, comprenant en outre au moins un agent colorant organique ou inorganique.

6. Utilisation d'une composition selon les revendications 1 à 5, dans laquelle lesdits additifs sont choisis dans le groupe constitué des agents antimousse, des agents tensio-actifs, des agents épaississants, des agents d'étalement, des régulateurs de rhéologie et des agents biocides.

7. Utilisation d'une composition selon les revendications 1 à 6, dans laquelle ladite composition comprend en outre un pigment électriquement conducteur et/ou magnétique.

8. Utilisation d'une composition selon l'une quelconque des revendications précédentes, dans laquelle ladite matière de charge est au moins une préparation finement divisée de particules choisies dans le groupe constitué par le carbonate de calcium, le sulfate de baryum et le dioxyde de titane.

9. Utilisation d'une composition telle que définie dans l'une quelconque des revendications précédentes pour l'impression par flexographie, par héliogravure, et par sérigraphie.
